# EUROPEAN PATENT SPECIFICATION

(11) **EP 0 256 466 B1**
(45) Date of publication and mention of the grant of the patent: **09.06.1993**
(21) Application number: 87111527.5
(22) Date of filing: 10.08.1987
(51) Int. Cl.: G05G 1/14, B60T 7/04, B60K 26/00

(54) **Control pedal apparatus for a motor vehicle**
Pedalvorrichtung für ein Motorfahrzeug
Dispositif de commande à pédale pour véhicule à moteur

(30) Priority: 18.08.1986 US 897197
(43) Date of publication of application: 24.02.1988
(73) Proprietor: Comfort Pedals Inc., Warren, Michigan 48089 (US)
(72) Inventor: Sitrin, Gabriel M., West Bloomfield Michigan 48033 (US)
(74) Representative: Kügele, Bernhard

(56) References cited:
- DE-A- 2 222 397
- US-A- 3 511 109
- US-A- 3 643 524
- US-A- 3 691 868

## Description

### Introduction

This invention relates to a motor vehicle control pedal apparatus including an adjuster member mounted on a mounting bracket member of the vehicle for pivotal movement about a pivot axis, attachment means on said adjuster member defining an attachment point for attachment of a control member for operation of a control system of the vehicle in response to pivotal movement of said adjuster member a pedal arm member mounted for adjustable movement on the adjuster member and adjuster means for providing relative adjusting movement between the adjuster member and the pedal arm member.

### Background of the Invention

In a conventional automotive vehicle, pedals are provided for controlling brakes and engine throttle. If the vehicle has a manual transmission, a clutch pedal is also provided. These pedals are foot operated by the driver. In order for the driver to obtain the most advantageous position for working these controls, the vehicle front seat is usually slidably mounted on a seat track with means for securing the seat along the track in a plurality of adjustment positions.

The adjustment provided by moving the seat along the seat track does not accommodate all vehicle operators due to differences in anatomical dimensions. Further, there is growing concern that the use of seat tracks, and especially long seat tracks, constitutes a safety hazard in that the seat may pull loose from the track during an accident with resultant injuries to the driver and/or passengers. It is therefore desirable to either eliminate the seat track entirely or shorten the seat track to an extent that it will be strong enough to retain the seat during an impact. Shortening or eliminating the seat track requires that means be provided to selectively move the various control pedals to accommodate the various size drivers.

Various proposals have been made in the past to provide selective adjustment of the pedal positions to accommodate various size drivers but none of these prior art adjustment proposals has met with any significant commercial acceptance since the proposed mechanisms have been unduly complex and expensive, and/or have been extremely difficult to operate, and/or have accomplished the required pedal adjustment only at the expense of altering other critical dimensional relationships as between the driver and the various pedals.

US-A-3,643,524 e.g. describes an adjustable control pedal arrangement which permits to vary the position of the foot pad relative to the pivot point, however, the pivot point is invariable and therefore any adjustment of the position of the foot pad varies the distance between the foot pad and the pivot point.

### Summary of the Invention

This invention is directed to a control pedal mechanism in which the pedal position is readily adjusted without disturbing the essential dimensional relationships in the control environment.

The invention control pedal apparatus is characterized in that the adjuster means includes compensator means operative in response to relative movement between the adjuster member and the pedal arm member to adjustably move the pivot axis to control the relationship between the distance from the pivot axis to a pedal pad carried on the lower end of the pedal arm member and the distance from the pivot axis to the attachment point on the adjuster member. This arrangement allows the pedal to be selectively adjusted to suit the individual driver without disturbing the operative relationship of the control pedal assembly to the involved control member of the vehicle.

According to a further feature of the invention, the pedal adjustment means is further operative during the selective movement of the pedal pad relative to the bracket to maintain a fixed ratio between the distance from the pivot axis to the pedal pad and the distance from the pivot axis to the attachment point of the vehicular control member. This arrangement allows the pedal pad to be selectively adjusted without disturbing the optimal mechanical advantage previously built into the pedal system during the original ergonomic design of the vehicle.

According to a further feature of the invention, the pedal assembly includes a pedal arm and an adjustor member; the pedal pad is mounted on the lower end of the pedal arm; the attachment means for the control member of the vehicle is mounted on the adjustor member; the adjustor means comprises a pair of spaced pins on the pedal arm slidably guiding in spaced parallel tracks on the adjustor member, an oblique cam slot in the pedal arm, and mating generally vertical slots in the bracket and in the adjustment member intersecting the cam slot; and the pivot means comprises a pivot pin slidably received in the cam slot and in the matching slots in the bracket and in the adjustor member. With this arrangement, the pivot axis is moved upwardly and downwardly in response to sliding adjustment of the pedal arm on the adjustor member so as to selectively maintain the desired mechanical advantage originally built into the control pedal system.

According to a further feature of the invention, the pedal arm and adjustor member move relative to each other during the pedal adjustment but move as a single unit, in any position of relative adjustment of the pedal arm on the adjustor member, when pressure is applied to the pedal pad. This arrangement allows the pedal arm to be selectively adjusted on the adjustor member to provide the desired pedal pad position without disturbing the position of the vehicular control member secured to the adjustor member, and allows the pedal arm and adjustor member to connect positively and act in unison to positively control the vehicle irrespective of the relative positioning of the pedal arm on the adjustor member.

According to a further feature of the invention, a nut is carried by the pedal arm and a screw, extending generally in the direction of the tracks on the adjustor member, threadably engages the nut and is precluded from axial movement so that rotation of the screw causes the pins to slide in the tracks on the adjustor member to slidably adjust the pedal arm on the adjustor member. This arrangement provides an inexpensive and positive means of readily adjusting the pedal arm on the adjustor member.

In one disclosed embodiment of the invention in which the control member is a push rod controlling the master brake cylinder of the vehicle, the attachment means for the control member comprises pins secured to the adjustor member and received in an arcuate slot in the bracket, the nut is rigidly secured to the pedal arm between the guide pins, and the slot in the pedal arm constitutes an obliquely extending slot in the upper end of the pedal arm coacting with matching generally vertical slots in the adjustor member and in the bracket so that as the screw is rotated the pedal arm adjusts slidably along the adjustor member and the pivot axis is moved selectively upwardly and downwardly to maintain the desired ergonomically determined mechanical advantage in the brake pedal assembly.

In another embodiment of the invention in which the control member is a cable controlling the throttle of the vehicle, the pivot means comprises a pivot pin slidably received in the pedal arm slot and in the matching slots in the adjustor member and in the bracket, the nut is carried by the pivot pin, and the matching slots in the adjustor member and in the bracket and are generally centered on the attachment point of the throttle cable to the adjustor member. With this arrangement, rotation of the screw causes the pedal arm to slidably adjust on the adjustor member with the pivot pin and associated nut moving along path generally centered on the attachment point of the throttle cable so as not to disturb the throttle cable during the pedal adjustment process.

### Brief Description of the Drawings

FIGURE 1 is an exploded view of a first embodiment of the invention control pedal apparatus suitable for use with a brake pedal;
FIGURE 2 is an assembled view of the control pedal apparatus of FIGURE 1;
FIGURE 3 is an exploded view of a second embodiment of the control pedal apparatus of the invention suitable for use with an accelerator pedal;
FIGURE 4 is an assembled view of the control pedal apparatus of FIGURE 3; and
FIGURE 5 is a perspective view of a screw pivot member employed in the control apparatus of FIGURES 3 and 4.

### Detailed Description of the Preferred Embodiment

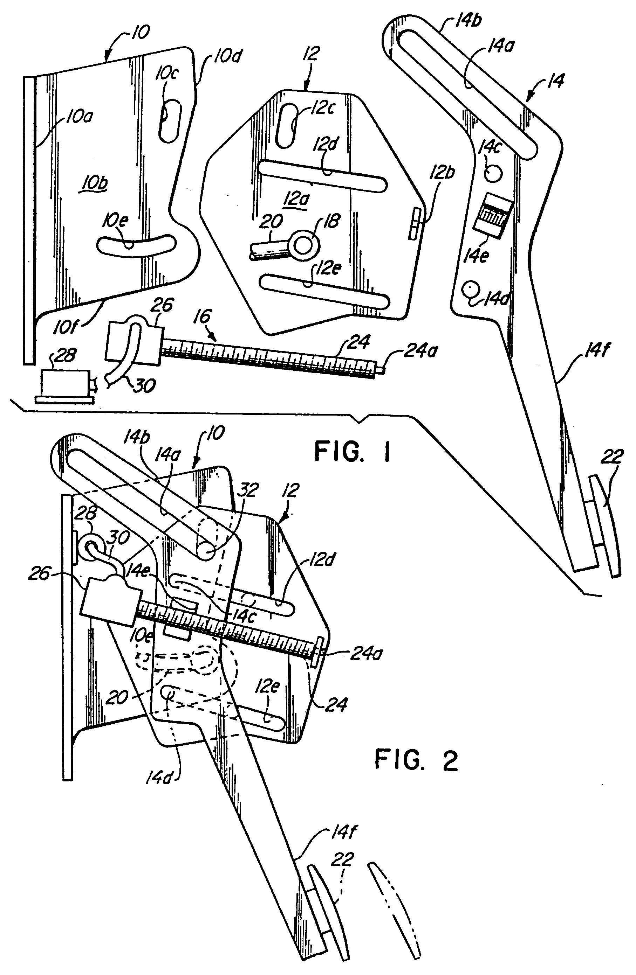

The brake pedal apparatus of Figures 1 and 2, broadly considered, comprises a bracket 10, an adjustor member 12, a pedal arm 14, and a screw assembly 16.

Bracket 10 is formed of a suitable metallic material and includes a flange portion 10a for attachment of the bracket to the fire wall of the motor vehicle and a main body portion 10b. A generally vertical slot 10c is formed in the upper portion of main body portion 10b adjacent its forward edge 10d. An arcuate slot 10e is formed in main body portion 10b adjacent its lower edge 10f. Although bracket 10 is shown for simplicity as comprising a single plate member, in actuality bracket 10 would be fabricated as two laterally spaced identical plate members suitably rigidly joined together.

Adjustor member 12 is formed of a suitable metallic material and includes a main body portion 12a, a lug portion 12b, and a pin 18. Main body portion 12a is generally planar and defines an upper generally vertically extending slot 12c corresponding to slot 10c in bracket 10, and a pair of parallel generally horizontally extending straight slots 12d and 12e. Pin 18 extends normally from main body portion 12a between slots 12d and 12e and is sized to fit slidably in slot 10e in bracket 10. A brake master cylinder push rod 20 is pivotally mounted on pin 18 so that pin 18 defines an attachment point for the brake master cylinder control rod. Whereas adjustor member 12 is shown for simplicity as a single plate member, adjustor member 12 in actuality would be formed of two spaced identical members rigidly joined together and sized to fit in sandwich fashion between the two spaced plates of bracket 10.

Pedal arm 14 is formed of a suitable metallic material and includes an oblique slot 14a in the upper end 14b of the arm, a pair of vertically spaced pins 14c and 14d projecting laterally from the arm, a nut 14e rigidly secured to the arm between pins 14c and 14d, and a lower arm portion 14f. A brake pedal pad 22 is secured to the lower end of pedal arm 14. Pedal arm 14, as shown, comprises a single plate like member and is fitted in sandwich fashion between the spaced plates of adjustor member 12.

Screw assembly 16 comprises a screw 24, an adaptor member 26, and a motor 28. Screw 24 has a size and pitch to match the size and pitch of nut 14e on pedal arm 14 and includes a pilot portion 24a at its forward end journalling in a suitable bore in lug portion 12b of adjustor member 12. Adaptor member 26 mounts the rear end of screw 24 and functions in known manner to convert rotary movement of a flexible cable 30 connected to the output of a motor 28 into rotary movement of screw 24.

The various components of the control pedal apparatus of Figure 1 are seen in assembled relation in Figure 2. In assembled relation, pins 14c and 14d of pedal arm 14 are slidably received in slots 12d and slots 12e respectively of adjustor member 12; push rod pin 18 is slidably received in slot 10e of bracket 10; screw 24 is threadably received in nut 14e with pilot portion 24a journalling in lug portion 12b of adjustor member 12; motor 28 is mounted on bracket 10 with drive cable 30 drivingly connected to adaptor member 26; and a pivot pin 32 is slidably received in slots 14a, 12c and 10c. It will be understood that pivot pin 32 includes head portions at each end to preclude axial movement of the pin out of the slots.

In operation of the brake pedal apparatus of Figures 1 and 2, motor 28 is suitable actuated to rotate screw 24 which causes nut 14e to travel along the rotating screw to slidably move pedal arm 14 relative to adjustor member 12 with the precise direction of the relative movement defined by sliding movement of pins 14c and 14d in slots 12d and 12e. This sliding movement of pedal arm 14 on adjustor member 12 moves pedal 22 forwardly and rearwardly to ergonomically accommodate drivers of various statures.

As pedal arm 14 slides relative to adapter member 12, pivot pin 32 moves cammingly upwardly in slots 10c and 12c by virtue of the camming action of oblique slot 14a in the pedal arm. Specifically, as pedal 22 is adjusted forwardly, pivot pin 32 is moved upwardly in slots 10c and 12b and as pedal pad 22 is adjusted rearwardly pivot pin 32 is moved downwardly in slots 10c and 12c. This upward and downward movement of pivot pin 32 in response to forward and rearward movement of the pedal pad has the effect of maintaining the ratio between the distance from the pivot axis defined by pivot pin 32 to pedal pad 22 and the distance from the pivot axis to the attachment point defined by push rod pin 18 substantially constant so that the mechanical advantage initially ergonomically built into the brake pedal assembly is maintained in all positions of adjustment of the pedal arm relative to the adjustor member.

When operator pressure is applied to pedal pad 22 in any position of relative adjustment of pedal arm 14 on adjustor member 12, the pedal arm and adjustor member move as a single unit about the pivot axis defined by the instantaneous position of pivot pin 32 whereby to apply the brakes of the vehicle through the push rod 20. Since the adjustor member 12 does not move during the adjustment of pedal arm 14 on the control member 12, the attachment point defined by push rod pin 18 is not moved during the adjustment process so that the critical interrelationship between the push rod and the brake master cylinder is not disturbed. In Figure 2, a rearwardly adjusted position of pedal arm 14, together with the corresponding positions of pivot pin 32 and pins 14c and 14d, are shown in solid lines whereas adjusted positions of these elements, corresponding to a relatively forward position of pedal pad 22, are shown in dotted lines.

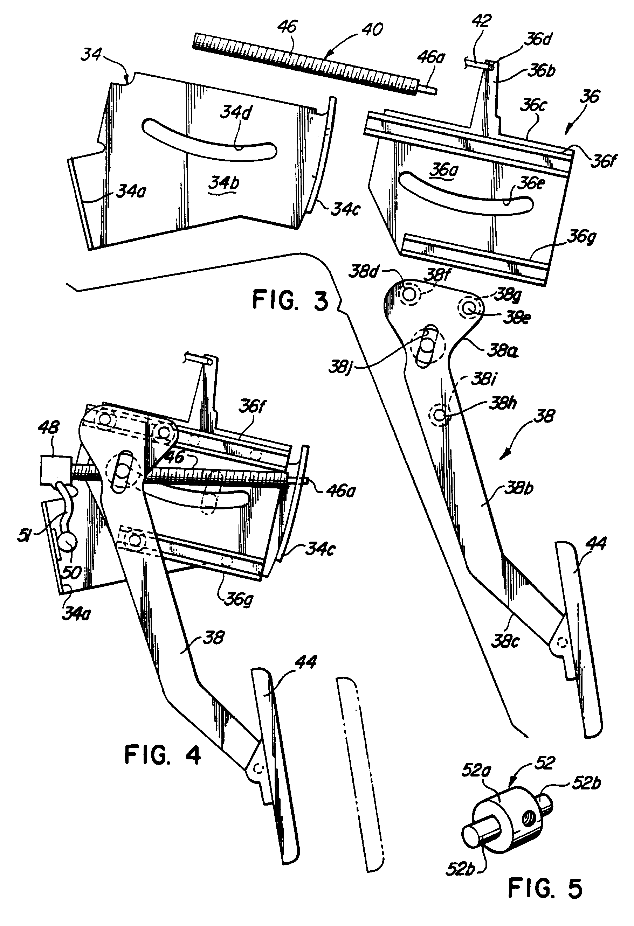

The accelerator pedal adjustment mechanism seen in Figures 3 and 4 is similar in many respects to the brake pedal adjustment mechanism of Figures 1 and 2 and, like the brake pedal mechanism, includes a bracket 34, an adjustor member 36, a pedal arm 38, and a screw assembly 40.

Bracket 34 is formed of a metallic material and includes a flange portion 34a for attachment of the bracket to the fire wall of the motor vehicle; a main body portion 34b; a forward flange portion 34c; and an arcuate slot 34d. Although bracket 34 is shown for simplicity as a single plate member, in actuality bracket 34 would comprise two laterally spaced identical plates rigidly secured together.

Adjustment member 36 is formed of a metallic material and includes a main body portion 36a and a lug portion 36b upstanding from the upper edge 36c of main body portion 36a and defining an attachment point 36d for securement of the control cable 42 for the throttle system of the vehicle. An arcuate slot 36e, centered on attachment point 36d and corresponding in radius and configuration to slot 34d in bracket 34, is provided in main body portion 36a, and upper and lower tracks 36f and 36g are secured to main body portion 36a adjacent the upper and lower edges of the adjustor member and extending in generally horizontal, parallel relation.

Pedal arm 38 includes an upper portion 38a, an intermediate portion 38b, and a lower portion 38c. Upper portion 38a is triangulated and includes a pair of spaced pins 38d and 38e at the upper apexes of upper portion 38a and respectively journalling guide rollers 38f and 38g.

A third guide pin 38h is provided in the intermediate portion 38b of the pedal arm and journals a guide roller 38i. A vertically extending slot 38j is provided in the pedal arm between upper guide pins 38d and 38e and lower guide pins 38h. An accelerator pedal pad 44 is pivotally secured to the lower end of the pedal arm.

Screw assembly 40 includes a screw 46 including a pilot portion 46a, an adaptor 48 receiving the rearward end of the screw, and a motor 50 driving adapter member 48 through a flexible drive cable 51.

In the assembled relation of the control apparatus of Figure 3, as seen in Figure 4, guide rollers 38f and 38g are rollably received in upper track 36f of the adjustor member; guide roller 38i is rollably received in lower track 36g of the adjustor member; bracket flange 34a is suitably secured to the fire wall of the vehicle; motor 50 is suitably secured to bracket 34; pilot portion 46a of screw 46 is journalled in flange portion 34c of the bracket; and a screw pivot member 52, seen in detail in Figure 5, is received in aligned slots 38j, 34d and 36e. Screw pivot member 52 includes a central nut portion 52a threadably receiving screw 46 and pivot pin portions 52b suitably received in the slots 34d of the spaced plates comprising the bracket 34 and suitably received in adjustor member slot 36e and pedal arm slot 38j.

In the operation of the accelerator pedal mechanism of Figures 3-5, motor 50 is suitably actuated to rotate screw 46 and thereby move pedal arm 38 along adjustor member 36 with the precise direction of the movement determined by the rolling, guiding movement of guide rollers 38d, 38g and 38i in tracks 36f and 36g. As the pedal arm moves rollably and slidably along adjustor member 36, accelerator pedal 44 is selectively adjusted to suit the ergonomic requirements of the particular driver. When operator pressure is applied to accelerator pedal 44 in any adjusted position of pedal arm 38 relative to adjustor member 36, the pedal arm and adjustor member pivot as a single unit about the axis defined by pivot screw 52 to suitably move the control cable 42 controlling the throttle mechanism of the vehicle. As the pedal arm moves slidably and adjustably along adjustor member 36, pivot portions 52b of screw pivot 52 move slidably along aligned slots 34d and 36e and, concurrently, move vertically relative to slot 38j. Since slots 34d and 36e are centered on attachment point 36d, the attachment point does not move during the adjustment of the pedal arm relative to the adjustor member so that the cable 42 controlling the throttle mechanism of the vehicle is not disturbed.

Since the aligned slots 34d, 36e and the vertical slot 38j intersect each other and are angularly disposed with respect to each other, the pivot portions 52b of screw 52 are always bearing on four points of the intersecting slots so that the position of the screw pivot is fixed in any position of adjustment of the pedal arm relative to the adjustor member so that, when pressure is applied to the accelerator pad, the pedal arm and adjustor member will pivot as a single unit about the instantaneous axis defined by the screw pivot.

The invention control pedal adjustment mechanism will be seen to provide a simple and efficient means of readily adjusting the control pedal to suit the particular ergonomic requirements of the particular driver without disturbing the other critical dimensional relationships between the pedal assembly and the related control elements of the motor vehicle.

## Claims

1. A motor vehicle control pedal apparatus including an adjuster member (12, 36) mounted on a mounting bracket member (10, 34) of the vehicle for pivotal movement about a pivot axis (32, 52b), attachment means (18, 36d) on said adjuster member defining an attachment point for attachment of a control member (20, 42) for operation of a control system of the vehicle in response to pivotal movement of said adjuster member, a pedal arm member (14, 38) mounted for adjustable movement on the adjuster member and adjuster means (24, 14e, 14c, 14d, 12d, 12e; 46, 52, 38d, 38f, 38e, 38g, 38h, 38i, 36f, 36g) for providing relative adjusting movement between the adjuster member and the pedal arm member, characterized in that the adjuster means includes compensator means (14a, 10c, 12c; 52b, 34d, 36e, 38j) operative in response to relative movement between the adjuster member and the pedal arm member to adjustably move the pivot axis to control the relationship between the distance from the pivot axis to a pedal pad (22; 44) carried on the lower end of the pedal arm member and the distance from the pivot axis to the attachment point on the adjuster member.

2. A control pedal apparatus according to claim 1 wherein the compensator means comprises coacting means on the pedal arm member (14a, 38j) and on the adjuster member (12c, 36e).

3. A control pedal apparatus according to claim 1 wherein the adjuster means comprises means (14c, 14d, 12d, 12e; 38d, 38f, 38e, 38g, 38h, 38i, 36f, 36g) mounting the pedal arm member (14; 38) for sliding adjustment on the adjuster member and means (32, 14a, 12c, 10c; 52b, 38j, 36e, 34d) operative to produce joint pivotal movement of the pedal arm member and adjuster member about the pivot axis in response to operator pressure on a pedal pad secured to the lower end of the pedal arm member in any position of sliding adjustment of the pedal arm member on the adjuster member.

4. A control pedal apparatus according to claim 1 wherein the adjuster means comprises a pair of spaced pins (14c, 14d; 38d, 38h) on the pedal arm member, a pair of parallel tracks (12d, 12e; 36f, 36g) on the adjuster member respectively slidably receiving the pins, a nut (14e, 52) carried by the pedal arm member, and a screw(24, 46) extending generally in the direction of the tracks, threadably engaging the nut, and precluded from axial movement so that rotation of screw causes the pins to slide in the tracks to slidably adjust the pedal arm member on the adjuster member.

5. The control pedal apparatus according to claim 4 wherein a slot (14a, 38j) is provided in the pedal arm member, matching slots (12c, 10c; 36e, 34d) are provided in the adjuster member and in the bracket member, the matching slots intersect the pedal arm member slot and extend in a direction at an angle to the direction of the pedal arm member slot, and the pivot means comprises a pivot pin (32, 52b) slidably received in the pedal arm member slot and in the matching slots.

6. A control pedal apparatus according to claim 5 wherein the nut (52a) is carried by the pivot pin (52b).

7. A control pedal apparatus according to claim 1 wherein the apparatus further includes attachment means (18, 36d) on the adjuster member defining an attachment point for attachment of a control member (20, 42) for operation of a control system of the vehicle in response to pivotal movement of the pedal arm member upon the application of operator pressure to a pedal pad (22, 44) secured to the lower end of the pedal arm member and the adjuster means is operative to adjustably move the pedal arm member relative to the adjuster member without moving the attachment point relative to the bracket member.

8. A control pedal apparatus according to claim 7 wherein the control pedal apparatus comprises an accelerator pedal apparatus (44) and the control member comprises a cable (42) controlling the supply of fuel to the engine of the vehicle.

9. A control pedal apparatus according to claim 4 wherein the nut (14e) is rigidly secured to the pedal arm member between the pins (14c, 14d).

10. A control pedal apparatus according to claim 5 wherein the pedal arm slot (14a) is provided in the upper end (14b) of the pedal arm member and extends obliquely and the matching slots (12c, 10c) extend generally vertically.

11. A control pedal apparatus according to claim 10 wherein the apparatus further includes attachment means comprising a pin (18) secured to the adjuster member and received in a slot (10e) in the bracket member and a push rod (20) secured to the pin and operatively associated with the master brake cylinder of the vehicle.

12. A control pedal apparatus according to claim 1 wherein the compensator means is further operative during such relative movement between the members to maintain a substantially fixed ratio between the distance from the pivot axis to a pedal pad carried on the lower end of the pedal arm and the distance from the pivot axis to an attachment point on the adjuster member.

13. A control apparatus according to claim 1 wherein the relationship between the distance from the pivot axis to the pedal pad (22; 44) and the distance from the pivot axis to the attachment point is controlled in a manner to maintain a substantially constant ratio between the distances.

14. A control pedal apparatus according to claim 1 wherein the mounting means comprises a pair of spaced pins (14c, 14d; 38f, 38i) on the pedal arm member slidably guiding in spaced tracks (12d, 12e; 36f, 36g) on the adjuster member, coacting intersecting angularly related slots in the adjuster member (12c, 36e) and in the pedal arm member (14a, 38j) and a pivot pin (32, 52b) slidably received in the coacting slots.

15. A control pedal apparatus according to claim 1 wherein a pedal pad (22, 44) is secured to the lower end of the pedal arm and attachment means (18, 36d) are provided on the adjuster member defining an attachment point for attachment of a control member (20, 42) for operation of a control system of the vehicle in response to pivotal movement of the pedal arm member upon the application of operator pressure to the pedal pad, and the adjuster means includes means (24, 14e, 14c, 14d; 46, 52, 38h, 38i, 38d, 38f, 38e, 38g, 36g, 36f) operative to selectively adjust the position of the pedal arm member on the adjuster member and means (14a, 32, 12c; 38j, 34d, 36e) operative during such adjustment to selectively vary both the distance from the pivot axis to the pedal pad and the distance from the pivot axis to the attachment point.

16. A control pedal apparatus according to claim 1 wherein the pedal arm (14,13), the adjuster member (12,36), and the bracket (10,34) are intersected by the pivot axis.

## Patentansprüche

1. Steuerpedalvorrichtung für ein Motorfahrzeug, mit einem an einer Befestigungstrageinrichtung (10,34) des Fahrzeuges für eine Schwenkbewegung um eine Schwenkachse (32, 52b) befestigten Einstellglied (12, 36), an welchem Einstellglied eine Befestigungseinrichtung (18, 36d) einen Befestigungspunkt für die Befestigung eines Steuergliedes (20, 42) zur Betätigung eines Steuersystemes des Fahrzeuges in Abhängigkeit von einer Schwenkbewegung des Einstellgliedes definiert, und an welchem Einstellglied ein Pedalarmelement (14, 38) für eine einstellbare Bewegung befestigt ist, und mit einer Einstelleinrichtung (24, 14e, 14c, 14d, 12d, 12e; 46, 52, 38d, 38f, 38e, 38g, 38h, 38i, 36f, 36g) für eine relative Einstellbewegung zwischen dem Einstellglied und dem Pedalarmelement, dadurch gekennzeichnet, daß die Einstelleinrichtung eine Kompensatoreinrichtung (14a, 10c, 12c; 52b, 34d, 36e, 38j) aufweist, die auf Grund einer Relativbewegung zwischen dem Einstellglied und dem Pedalarmelement wirksam ist, um die Schwenkachse einstellbar zum Steuern des Verhältnisses zwischen der Distanz von der Schwenkachse zu einem am unteren Ende des Pedalarmelementes gehaltenen Pedaltretbelag (22; 44) und der Distanz von der Schwenkachse zu einem Befestigungspunkt am Einstellglied zu bewegen.

2. Steuerpedalvorrichtung nach Anspruch 1, bei der die Kompensatoreinrichtung miteinander zusammenwirkende Einrichtungen am Pedalarmelement (14a, 38j) und am Einstellglied (12c, 36e) aufweist.

3. Steuerpedalvorrichtung nach Anspruch 1, bei der die Einstelleinrichtung eine Einrichtung (14c, 14d, 12d, 12e; 38d, 38f, 38e, 38g, 38h, 38i, 36f, 36g) aufweist, die das Pedalarmelement (14; 38) für eine Gleiteinstellung des Einstellgliedes montiert, sowie eine Einrichtung (32, 14a, 12c, 10c; 52b, 38j, 36e, 34d), die zur Erzeugung einer gemeinsamen Schwenkbewegung des Pedalarmelementes und des Einstellgliedes um die Schwenkachse auf Grund des Druckes der Bedienungsperson auf einen Pedaltretbelag wirksam ist, der am unteren Ende des Pedalarmelementes befestigt ist, und zwar in jeder beliebigen Lage der Gleiteinstellung des Pedalarmelementes am Einstellglied.

4. Steuerpedalvorrichtung nach Anspruch 1, bei der die Einstelleinrichtung am Pedalarmelement ein Paar voneinander beabstandeter Stifte (14c, 14d; 38d, 38h), welche Stifte in einem Paar von zueinander parallelen Führungsbahnen (12d, 12e; 36f, 36g) am Einstellglied jeweils gleitbar aufgenommen sind, wobei eine vom Pedalarmelement getragene Nuß (14e, 52) vorgesehen ist, und eine sich im allgemeinen in Richtung der Führungsbahnen erstreckende, schraubbar in die Nuß eingreifende Schraube (24, 46) an einer Axialbewegung gehindert ist, so daß eine Drehung der Schraube die Stifte zum Gleiten in den Führungsbahnen zum gleitenden Einstellen des Pedalarmelementes am Einstellglied veranlaßt.

5. Steuerpedalvorrichtung nach Anspruch 4, bei der ein Schlitz (14a, 38j) am Pedalarmelement vorgesehen ist, und zueinander passende Schlitze (12c, 10c; 36e, 34d) im Einstellglied und in der Trageinrichtung vorgesehen sind, welche zueinander passenden Schlitze quer zum Schlitz des Pedalarmelementes liegen und sich in einer unter einem Winkel zur Richtung des Schlitzes des Pedalarmelementes verlaufenden Richtung erstrecken, wobei die Schwenkeinrichtung einen Schwenkstift (32, 52b) aufweist, der im Schlitz des Pedalarmelementes sowie in den zueinander passenden Schlitzen gleitbar aufgenommen ist.

6. Steuerpedalvorrichtung nach Anspruch 5, bei der die Nuß (52a) vom Schwenkstift (52b) getragen ist.

7. Steuerpedalvorrichtung nach Anspruch 1, bei der die Vorrichtung ferner eine Befestigungseinrichtung (18, 36d) am Einstellglied aufweist, die einen Befestigungspunkt für die Befestigung eines Steuergliedes (20, 42) für den Betrieb eines Steuersystems des Fahrzeuges in Abhängigkeit von einer Schwenkbewegung des Pedalarmelementes bei Anwendung eines Druckes durch die Bedienungsperson auf einen am unteren Ende des Pedalarmelementes befestigten Pedaltretbelag (22, 44) aufweist, wobei die Einstelleinrichtung für eine einstellbare Bewegung des Pedalarmelementes relativ zum Einstellglied ohne Relativbewegung des Befestigungspunktes zur Trageinrichtung wirksam ist.

8. Steuerpedalvorrichtung nach Anspruch 7, bei der die Steuerpedalvorrichtung eine Gaspedalvorrichtung (44) umfaßt und das Steuerglied ein Kabel (42) zum Steuern der Zufuhr von Brennstoff zum Motor des Fahrzeuges aufweist.

9. Steuerpedalvorrichtung nach Anspruch 4, bei der die Nuß (14e) am Pedalarmelement zwischen den Stiften (14c, 14d) starr befestigt ist.

10. Steuerpedalvorrichtung nach Anspruch 5, bei der der Schlitz (14a) des Pedalarmes am oberen Ende (14b) des Pedalarmelementes vorgesehen ist und sich schräg erstreckt, wogegen sich die zueinander passenden Schlitze (12c, 10c) im allgemeinen vertikal erstrecken.

11. Steuerpedalvorrichtung nach Anspruch 10, bei der die Vorrichtung ferner eine Befestigungseinrichtung mit einem Stift (18) aufweist, der am Einstellglied befestigt und in einem Schlitz (10e) der Trageinrichtung aufgenommen und mit einer Druckstange (20) verbunden ist, die dem Hauptbremszylinder des Fahrzeuges betrieblich zugeordnet ist.

12. Steuerpedalvorrichtung nach Anspruch 1, bei der die Kompensatoreinrichtung ferner während einer solchen Relativbewegung zwischen dem Glied bzw. dem Element wirksam ist, daß ein im wesentlichen festes Verhältnis zwischen der Distanz von der Schwenkachse zu einem am unteren Ende des Pedalarmes gehaltenen Pedaltretbelag und der Distanz von der Schwenkachse zu einem Befestigungspunkt am Einstellglied aufrechterhalten ist.

13. Steuerpedalvorrichtung nach Anspruch 1, bei der das Verhältnis zwischen der Distanz von der Schwenkachse zum Pedaltretbelag (22; 44) und der Distanz von der Schwenkachse zum Befestigungspunkt auf derartige Weise gesteuert wird, daß ein im wesentlichen konstantes Verhältnis zwischen den Distanzen aufrechterhalten wird.

14. Steuerpedalvorrichtung nach Anspruch 1, bei der die Befestigungseinrichtung ein Paar voneinander beabstandeter Stifte (14c, 14d; 38f, 38i) am Pedalarmelement aufweist, die in voneinander beabstandeten Führungsbahnen (12d, 12e; 36f, 36g) am Einstellglied gleitbar führen, ferner miteinander zusammenwirkende quer zueinander liegende und unter einem Winkel zueinander stehende Schlitze im Einstellglied (12c, 36e) und im Pedalarmelement (14a, 38j), sowie einen in den miteinander zusammenwirkenden Schlitzen gleitbar aufgenommenen Schwenkstift (32, 52b).

15. Steuerpedalvorrichtung nach Anspruch 1, bei der ein Pedaltretbelag (22, 44) am unteren Ende des Pedalarmes befestigt ist und Befestigungseinrichtungen (18, 36d) am Einstellglied befestigt sind, die einen Befestigungspunkt für die Befestigung eines Steuergliedes (20, 42) für den Betrieb eines Steuersystems des Fahrzeuges in Abhängigkeit von einer Schwenkbewegung des Pedalarmelementes bei Anwendung eines Druckes durch die Bedienungsperson auf den Pedaltretbelag definiert, und wobei die Einstelleinrichtung eine Einrichtung (24, 14e, 14c, 14d; 46, 52, 38h, 38i, 38d, 38f, 38e, 38g, 36g, 36f) aufweist, die zum wahlweisen Einstellen der Lage des Pedalarmelementes am Einstellglied wirksam ist, sowie eine Einrichtung (14a, 32, 12c; 38j, 34d, 36e) die während einer solchen Einstellung wirksam ist, um wahlweise sowohl die Distanz von der Schwenkachse zum Pedaltretbelag, als auch die Distanz von der Schwenkachse zum Befestigungspunkt zu verändern.

16. Steuerpedalvorrichtung nach Anspruch 1, bei der der Pedalarm (14, 13), das Einstellglied (12, 36) und der Träger (10, 34) von der Schwenkachse durchsetzt sind.

## Revendications

1. Dispositif de commande à pédale pour véhicule à moteur comprenant un élément de réglage (12, 36) monté sur un élément de support de montage (10, 34) du véhicule pour mouvement pivotant autour de l'axe d'un pivot (32, 52b), un moyen de fixation (18, 36d) sur ledit élément de réglage définissant un point de fixation pour la fixation d'un élément de commande (20, 42) pour le fonctionnement d'un système de commande du véhicule en réponse au mouvement pivotant dudit élément de réglage, un élément (14, 38) de bras de pédale monté pour mouvement réglable sur l'élément de réglage et un moyen de réglage (24, 14e, 14c, 14d, 12d, 12e; 46, 52, 38d, 38f, 38e, 38g, 38h, 38i, 36f, 36g) pour fournir un mouvement de réglage relatif entre l'élément de réglage et l'élément de bras de pédale, caractérisé en ce que le moyen de réglage comprend un moyen de compensateur (14a, 10c, 12c; 52b, 34d, 36e, 38j) fonctionnant en réponse au mouvement relatif entre l'élément de réglage et l'élément de bras de pédale de manière à déplacer de façon ajustée l'axe du pivot pour commander la relation entre la distance entre l'axe du pivot et le patin de la pédale (22; 44) porté sur l'extrémité inférieure de l'élément de bras de pédale et la distance entre l'axe du pivot et le point de fixation sur l'élément de réglage.

2. Dispositif de commande à pédale selon la revendication 1, dans lequel le moyen de compensateur comprend un moyen agissant simultanément sur l'élément de bras de pédale (14a, 38j) et sur l'élément de réglage (12c, 36e).

3. Dispositif de commande à pédale selon la revendication 1, dans lequel le moyen de réglage comprend un moyen (14c, 14d, 12d, 12e; 38d, 38f, 38e, 38g, 38h, 38i, 36f, 36g) montant l'élément de bras de pédale (14; 38) pour le réglage par coulissement sur l'élément de réglage, et un moyen (32, 14a, 12c, 10c; 52b, 38j, 36e, 34d) fonctionnant pour produire un mouvement de pivotement commun de l'élément de bras de pédale et de l'élément de réglage autour de l'axe du pivot en réponse à la pression exercée par l'opérateur sur le patin de pédale fixé à l'extrémité inférieure de l'élément de bras de pédale, dans toute position de réglage par coulissement de l'élément de bras de pédale sur l'élément de réglage.

4. Dispositif de commande à pédale selon la revendication 1, dans lequel le moyen de réglage comprend une paire de goujons espacés (14c, 14d; 38d, 38h) sur l'élément de bras de pédale, une paire de pistes parallèles (12d, 12e; 36f, 36g) sur l'élément de réglage recevant respectivement en coulissement les goujons, un écrou (14e, 52) porté par l'élément de bras de pédale, et une vis (24, 46) s'étendant généralement dans le sens des pistes, s'engageant par vissage dans l'écrou, et empêchée de se déplacer axialement de sorte que la rotation de la vis provoque le coulissement des goujons dans les pistes pour ajuster par coulissement l'élément de bras de pédale sur l'élément de réglage.

5. Dispositif de commande à pédale selon la revendication 4, dans lequel une fente (14a, 38j) est ménagée dans l'élément de bras de pédale, des fentes appariées (12c, 10c; 36e, 34d) sont pratiquées dans l'élément de réglage et dans l'élément de support, les fentes appariées coupent la fente de l'élément de bras de pédale et s'étendent dans une direction faisant un certain angle avec celle de la fente de l'élément de bras de pédale, et le moyen de pivot comporte un pivot (32, 52b) reçu en coulissement dans la fente de l'élément de bras de pédale et dans les fentes appariées.

6. Dispositif de commande à pédale selon la revendication 5, dans lequel l'écrou (52a) est supporté par le pivot (52b).

7. Dispositif de commande à pédale selon la revendication 1, dans lequel le dispositif comporte en outre un moyen de fixation (18, 36d) sur l'élément de réglage définissant un point de fixation pour la fixation d'un élément de commande (20, 42) destiné au fonctionnement d'un système de commande du véhicule en réponse au mouvement de pivotement de l'élément de bras de pédale lors de l'application par l'opérateur d'une pression à un patin de pédale (22, 44) assujetti à l'extrémité inférieure de l'élément de bras de pédale et le moyen de réglage peut fonctionner pour déplacer de façon réglable l'élément de bras de pédale par rapport à l'élément de réglage sans déplacer le point de fixation par rapport à l'élément de support.

8. Dispositif de commande à pédale selon la revendication 7, dans lequel le dispositif de commande à pédale comprend un appareil à pédale d'accélérateur (47) et l'élément de commande comporte un câble (42) commandant la fourniture de carburant au moteur du véhicule.

9. Dispositif de commande à pédale selon la revendication 4, dans lequel l'écrou (14e) est fixé rigidement à l'élément de bras de pédale entre les goujons (14c, 14d).

10. Dispositif de commande à pédale selon la revendication 5, dans lequel la fente (14a) du bras de pédale est ménagée dans l'extrémité supérieure (14b) de l'élément de bras de pédale et s'étend obliquement et les fentes appariées (12c, 10c) s'étendent généralement dans le sens vertical.

11. Dispositif de commande à pédale selon la revendication 10, dans lequel le dispositif comporte en outre un moyen de fixation comprenant un goujon (18) fixé à l'élément de réglage et reçu dans une fente (10e) pratiquée dans l'élément de support et une tige de poussée (20) fixée au goujon et associée opérationnellement au maître-cylindre des freins du véhicule.

12. Dispositif de commande à pédale selon la revendication 1, dans lequel le moyen de compensateur est en outre opérationnel pendant un tel mouvement relatif entre les éléments de manière à maintenir un rapport sensiblement fixe entre la distance entre l'axe du pivot et un patin de pédale porté sur l'extrémité inférieure du bras de pédale et la distance entre l'axe du pivot et un point de fixation sur l'élément de réglage.

13. Dispositif de commande selon la revendication 1, dans lequel la relation entre la distance entre l'axe du pivot et le patin de pédale (22, 44) et la distance entre l'axe du pivot et le point de fixation est commandée de façon à maintenir un rapport sensiblement constant entre les distances.

14. Dispositif de commande à pédale selon la revendication 1, dans lequel le moyen de montage comprend une paire de goujons espacés (14c, 14d; 38f, 38i) sur l'élément de bras de pédale guidant en coulissement dans des pistes espacées (12d, 12e; 36f, 36g) sur l'élément de réglage, coupant en agissant simultanément des fentes apparentées disposées angulairement dans l'élément de réglage (12c, 36e) et dans l'élément de bras de pédale (14a, 38j) et un axe de pivot (32, 52b) reçu en coulissement dans les fentes agissant simultanément.

15. Dispositif de commande à pédale selon la revendication 1, dans lequel un patin de pédale (22, 44) est fixé à l'extrémité inférieure du bras de pédale et un moyen de fixation (18, 36d) est prévu sur l'élément de réglage définissant un point de fixation pour la fixation d'un élément de commande (20, 42) destiné au fonctionnement d'un système de commande du véhicule en réponse au mouvement pivotant de l'élément de bras de pédale lors de l'application par l'opérateur d'une pression au patin de pédale, et le moyen de réglage comprend un moyen (24, 14e, 14c, 14d; 46, 52, 38h, 38i, 38d, 38f, 38e, 38g, 36g, 36f) servant à ajuster sélectivement la position de l'élément de bras de pédale sur l'élément de réglage, et un moyen (14a, 32, 12c; 38j, 34d, 36e) servant, pendant un tel réglage, à faire varier sélectivement la distance entre l'axe du pivot et le patin de pédale ainsi que la distance entre l'axe du pivot et le point de fixation.

16. Dispositif de commande à pédale selon la revendication 1, dans lequel le bras de pédale (14, 13), l'élément de réglage (12, 36) et le support (10, 34) sont coupés par l'axe du pivot.
